(19) **Europäisches Patentamt**
**European Patent Office**
**Office européen des brevets**

(11) Veröffentlichungsnummer: **0 321 685 B1**

(12) **EUROPÄISCHE PATENTSCHRIFT**

(45) Veröffentlichungstag der Patentschrift: **04.12.91**

(51) Int. Cl.5: **B22D 11/126**, B23K 37/04, B65G 13/12, B23Q 7/05, B21D 43/02

(21) Anmeldenummer: **88118383.4**

(22) Anmeldetag: **04.11.88**

(54) **Verfahren zum Unterstützen von stabförmigen Werkstücken.**

(30) Priorität: **12.12.87 DE 3742174**

(43) Veröffentlichungstag der Anmeldung:
**28.06.89 Patentblatt 89/26**

(45) Bekanntmachung des Hinweises auf die
Patenterteilung:
**04.12.91 Patentblatt 91/49**

(84) Benannte Vertragsstaaten:
**AT BE CH ES FR GB IT LI NL SE**

(56) Entgegenhaltungen:
**EP-A- 0 195 289**
**DE-A- 367 985**
**DE-A- 1 752 747**
**DE-A- 2 219 797**
**US-A- 4 255 993**

(73) Patentinhaber: **Oxytechnik Ges. für Systemtechnik mbH
Frankfurter Strasse 10
W-6236 Eschborn 1(DE)**

(72) Erfinder: **Lehmler, Hans-Friedrich
Ricarda-Huch-Strasse 40
W-6380 Bad Homburg v.d. H.(DE)**
Erfinder: **Lentz, Gerhard
In der Bitterwiese 13
W-6272 Niedernhausen 3(DE)**
Erfinder: **Wilkens, Günter
Im Schmidtstück 8
W-6233 Kelkheim(DE)**

(74) Vertreter: **Roesner, Werner
MESSER GRIESHEIM GmbH Patentabteilung
Lärchenstrasse 137 Postfach 83 00 48
W-6230 Frankfurt/Main 83(DE)**

## Beschreibung

Die Erfindung betrifft ein Verfahren zum Unterstützen von stabförmigen Werkstücken, die auf scheibenförmigen Stützrollen eines Längsförderers abgelegt werden.

Beim thermischen Bearbeiten mit einem Schneidbrenner werden die Werkstücke in den Schneidbereich einer Schneidstation gefördert und im Schneidbereich relativ zum Schneidbrenner positioniert.

Aus dem gattungsbildenden Stand der Technik nach der DE 2813461 A1 ist es bekannt, Brammen mit rechteckförmigem Querschnitt auf scheibenförmigen Stützrollen abzulegen. Zum Brennschneiden der Brammen läuft eine Schneidstation in der Gießgeschwindigkeit des Stranges mit. Um dabei eine Gefährdung der Stützrollen durch die aus dem Schneidbrenner austretende Schneidflamme zu vermeiden, sollen die Stützrollen bei größeren Abweichungen von einer vorgegebenen Brennschneidbahn mittels einer geeigneten Einrichtung auf ihrer Achse verschiebbar sein.

Gemäß der DE 3428139 C2 sind die Werkstücke als T-, U-, I-, L-, Flach- oder Wulstprofile ausgebildet. Zum Transport werden diese Profile mit den unterschiedlichen Querschnittsformen in einem Wagen auf Profilaufnehmerplatten abgelegt und der Wagen entlang einer Laufbahn in den Schneidbereich bewegt.

Bei einer Profilschneidanlage nach der DE 3510381 C2 werden diese Profile auf einem Rollengang mit Zylinderrollen abgelegt, die sich über die gesamte Profilauflagefläche erstrecken. Als Führung der Profile sind senkrecht zu der Auflagefläche fest angeordnete Anlagerollen innerhalb der Auflagefläche zwischen den Zylinderrollen des Rollengang vorgesehen. Das Positionieren der Profile erfolgt in einer am Ende des Rollenganges angeordneten Positioniervorrichtung zwischen verstellbaren Stützrollen.

Derartige lange T-, U-, I-, L-, Flach- oder Wulstprofile weisen aufgrund von Krümmungen bzw. Biegungen über ihre Längserstreckung seitliche Abweichungen auf, die eine Förderung in die Öffnung der Positioniervorrichtung erschweren. Hinzu kommt, daß während der Positionierung in der Positioniervorrichtung die Profile an ihrem freien Ende in ihrer Lage gehalten werden müssen.

Aus der DE 27 42 072 A2, der DE 33 31 844 C1 und der DE 31 36 394 A1 sind Bohrstationen für Profile bekannt, in denen die Profile ebenfalls auf Rollengängen mit Zylinderrollen angeordnet werden.

Bei einem Zusatzgerät für eine Verformungspresse werden Blechbänder mittels zwei angetriebenen Stütz- und Führungsrollen taktweise zu der Verformungspresse gefördert. Dabei liegen die Blechbänder auf den Stützrollen auf. Jeweils eine Stütz- und Führungsrolle ist auf einem gemeinsamen Träger befestigt. Bei einer derartigen Fördervorrichtung können keine U-, I-, L-, T- oder Wulstprofile mit ihren Stegen auf den Stützrollen abgelegt werden.

Eine Vorrichtung zum Fördern von Winkelprofilen, in der die Profile an jeder Seite zwischen zwei sich gegenüberliegenden, angetriebenen Rollen eingespannt ist, wird in der US-A-4,255,993 beschrieben. Nachteilig hierbei ist, daß die Profile mit ihrer Stirnseite in die Fördervorrichtung eingefädelt werden müssen, was die Längserstreckung der Anlage verdoppelt. Hinzu kommt, daß bei sich ändernden Abmessungen der Profile aufwendige Einstell- und Nachstellarbeiten vorgenommen werden müssen, um ein sicheres Greifen der Antriebsrollen zu gewährleisten. Bei sich ändernden Profilformen müssen jeweils andere Fördervorrichtungen eingesetzt werden.

Der Erfindung liegt die Aufgabe zugrunde, eine lagestabile Unterstützung beim Fördern der unterschiedlichen Profilquerschnitte und -dimesionen auf einem einzigen Längsförderer zu ermöglichen.

Diese Aufgabe wird erfindungsgemäß dadurch gelöst, daß die als U-, I-, L-, T- oder Wulstprofile ausgebildeten Werkstücke mit ihren Stegflächen auf mindestens zwei nebeneinanderliegenden scheibenförmigen Stützrollen abgelegt und an senkrecht zu der Auflagefläche der scheibenförmigen Stützrollen entlang der Längsförderrichtung fest angeordneten Anlageelementen mit den Flanschen angelegt werden.

Die mit der Erfindung erzielten Vorteile bestehen insbesondere in einer lagestabilen Förderung der Profile. Ein "Einfädeln" in die Öffnung der Positioniervorrichtung erfolgt ohne Probleme, da durch die außerhalb der Auflagefläche der Scheibenrollen angeordneten Anlageelemente in Verbindung mit der ihnen zugeordneten verstellbaren Rollenleiste nur eine vorbestimmte seitliche Abweichung zugelassen wird. Die Unterstützungsrollen der Positioniervorrichtung können vorteilhaft entfallen.

Weitere vorteilhafte Ausbildungen der Erfindung sind in den Unteransprüchen angegeben.

Ein Ausführungsbeispiel der Erfindung ist in der Zeichnung dargestellt und wird im folgenden näher beschrieben.

Es zeigen:

Fig. 1    eine Vorderansicht des Rollenganges mit scheibenförmigen Stützrollen zur Durchführung des Verfahrens;

Fig. 2    ein Ausschnitt einer Draufsicht;

Fig. 3    ein auf den scheibenförmigen Stützrollen angeordnetes L-Profil (Winkel-Profil),

Fig. 4    eine schematische Darstellung eines U-, I-, T-bzw. Wulstprofiles.

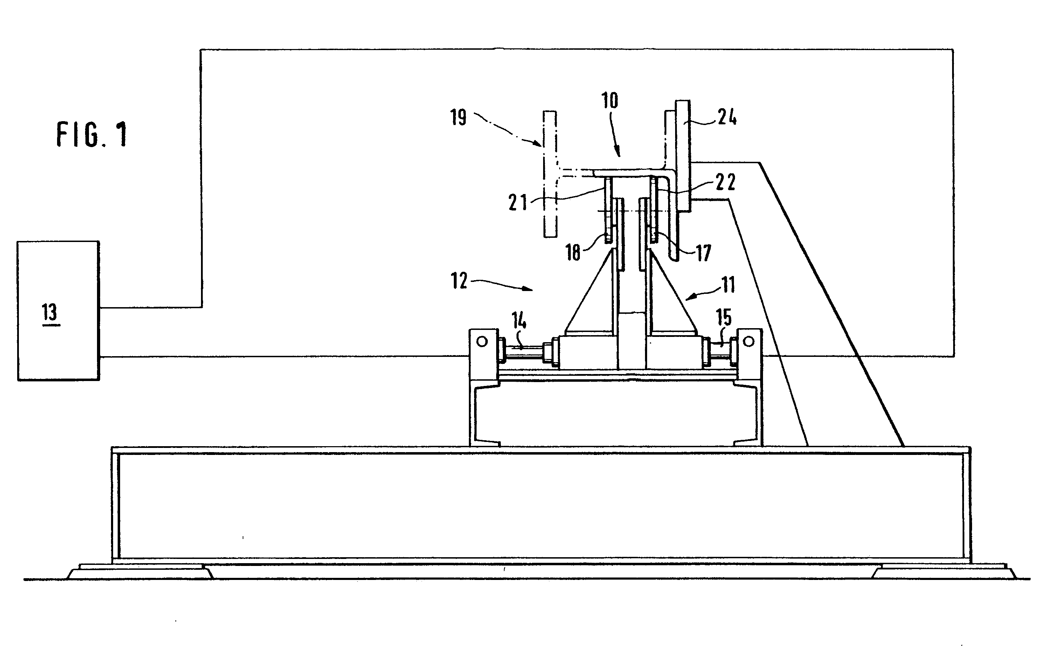

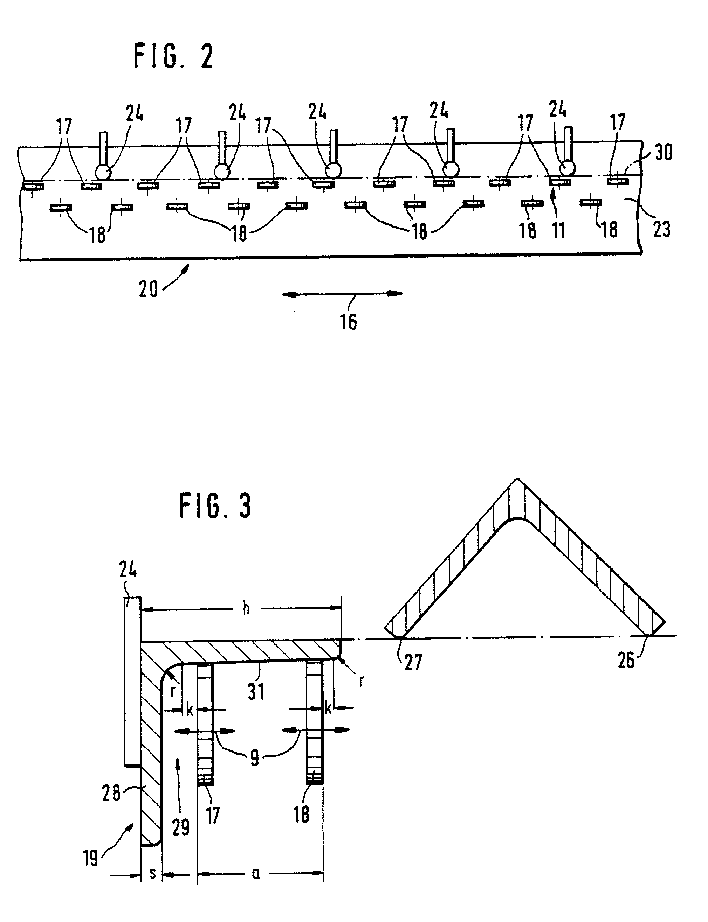

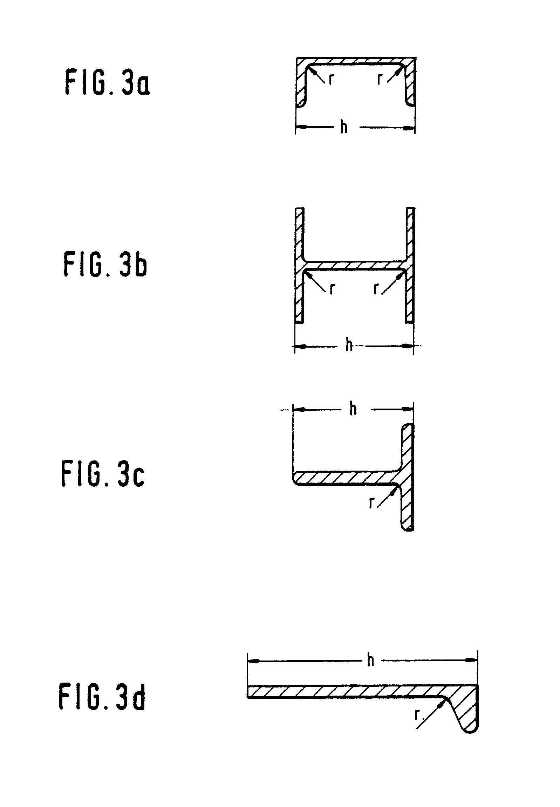

In Fig. 1 und Fig. 2 ist ein Rollengang 10 zum Unterstützen von T-, U-, I-, L-, oder Wulstprofilen schematisch dargestellt. Der Rollengang 10 ist Bestandteil eines Profilschneidsystems, wie es in der DE 35 10 381 C2 näher beschrieben ist. Er besteht aus zwei nahezu parallel zueinander verlaufenden Rollenleisten 11, 12, die über ein mit der Steuerung 13 des Profilschneidsystems in Verbindung stehendes Antriebssystem 14,15 senkrecht (Pfeilrichtung 9) zur Längsförderrichtung 16 automatisch verstellbar sind. Hierbei wird der Abstand a (Fig. 3) zwischen den an den Rollenleisten 11, 12 angeordneten scheibenförmigen Stützrollen 17, 18 vergrößert oder verkleinert. Die Ansteuerung jedes Antriebssystems 14, 16 quer zur Längsförderrichtung 16 erfolgt unabhängig vom jeweils anderen.

An den nebeneinanderliegenden Rollenleisten 11,12 sind in Längsförderrichtung 16 der Profile 19 (Fig. 3) hintereinander eine Vielzahl von scheibenförmigen Stützrollen 17, 18 in einer Flucht drehbar gelagert. Bei dieser Lagerung weisen die scheibenförmigen Stützrollen 17,18 mit ihren Außenflächen 21, 22 zu einer von der Lagerstelle abgewandten Seite und bilden einen seitlichen Abschluß. Von diesen Außenflächen 21,22 der Stützrollen 17,18 stehen keine über das nachfolgend noch näher zu erläuternde Maß s + r (Fig. 3) angeordneten Bauteile, wie Achsen, ab. Die Stützrollen 17, 18 der Rollenleisten 11, 12 sind in Längsförderrichtung 16 versetzt (Fig. 2) zueinander auf einem Grundgestell 20 angeordnet. Durch diese Anordnung können vorteilhaft die Stützrollen 17,18 in beliebig geringem Abstand zueinander angeordnet werden, so daß kleinste Profilhöhen h positioniert werden können.

Außerhalb des maximal einstellbaren Abstandes a sind senkrecht zu der Stützweite 23 der scheibenförmigen Stützrollen 17,18 neben der Rollenleiste 11 Anlageelemente 24, insbesondere Anlagerollen, fest angeordnet.

Die Anordnung der Anlageelemente 24 ist hierbei so vorgenommen, daß die scheibenförmigen Stützrollen 17 bei maximalem Abstand a zu den an der gegenüberliegenden Rollenleiste 12 befestigten Stützrollen 18 mit ihrer Außenfläche 22 an den Anlageelementen 24 zur Anlage gebracht werden können.

Im Betrieb wird ein U-, I-, T-, L-, oder Wulstprofil über einen nicht näher dargestellten Querförderer auf der Auflagefläche der scheibenförmigen Stützrollen 17, 18 abgelegt. Das in Fig. 3 dargestellte L-Profil 19 (Winkel-Profil), wird hierbei waagerecht mit auf beiden Stirnflächen 26,27 aufliegender Anordnung zu den scheibenförmigen Stützrollen 17, 18 gefördert. Wie aus der Fig. 3 ersichtlich, ist die Querförderung des L-Profiles 19 in dem Augenblick beendet, wenn der der Stirnfläche 27 zugehörige Flansch 28 des Profiles 19 an den Anlageelementen 24 anliegt. Anschließend wird der Querförderer abgesenkt und das L-Profil 19 wird mit seinem Flansch 28 in den zwischen den Anlageelementen 24 und der scheibenförmigen Stützrolle 17 gebildeten Zwischenraum 29 abgesenkt. Die seitliche Abmessung des Zwischenraumes 29 wird ausgehend von der Anlagefläche 30 (Fig. 2) der Anlageelemente 24 von der Steuerung 13 automatisch vorgegeben; sie bestimmt sich aus der Addition der Flanschbreite s bzw. bei einem Wulstprofil der Wulstbreite und des Radiuses r. Diese seitliche Mindestabmessung des Zwischenraumes 29 kann vor oder nach dem Ablegen der Profile 19 durch Ansteuern der Rollenleiste 11 mit den Stützrollen 17 eingestellt werden. Um eine möglichst große Stützweite 23 der Profile 19 auf den scheibenförmigen Stützrollen 17,18 zu erhalten, wird der Abstand a zwischen den Außenflächen 21, 22 der Stützrollen 17, 18 von der Steuerung 13 durch eine Verminderung der Profilhöhe h um die jeweilige Flansch- s bzw. Wulstbreite und der Radien r vorgegeben. Gemäß einer Weiterbildung des Verfahrens zur Unterstützung der Profile 19 wird der Abstand a zwischen den Außenflächen 21, 22 der scheibenförmigen Stützrollen 17, 18 von der Steuerung 13 zusätzlich um einen von der jeweiligen Profilhöhe h abhängigen Betrag k vermindert. Durch diese Maßnahme werden vorteilhaft Fertigungstoleranzen und Verbiegungen der Profile 19 ausgeglichen, so daß diese immer mit nach unten zu den Stützrollen 17, 18 gerichteten Flanschen 28 in den Zwischenraum 29 abgesenkt und mit ihrer Stegfläche 31 auf den Stützrollen 17, 18 abgelegt werden.

Im vorliegenden Ausführungsbeispiel wurde das Verfahren nach der Erfindung anhand eines L-Profiles 19 beschrieben. Grundsätzlich ist dieses Verfahren auch bei U-, I-, T-, oder Wulstprofilen anwendbar, so daß vorteilhaft alle in der Profil verarbeitenden Industrie benötigten Profile entsprechend diesen Verfahren auf einem einzigen Längsförderer unterstützt werden können. Die vorstehend genannten Profile sind in den Figuren 4a, b, c, d schematisch dargestellt, wobei Fig. 4a ein U-Profil, Fig. 4b ein I-Profil, Fig. 4c ein T-Profil und Fig. 4d ein Wulst-Profil zeigt.

**Patentansprüche**

1. Verfahren zum Unterstützen von stabförmigen Werkstükken, die auf scheibenförmigen Stützrollen eines Längsförderers abgelegt werden, dadurch gekennzeichnet,

daß die als U-, I-, L-, T- oder Wulstprofile (19) ausgebildeten Werkstücke mit ihren Stegflächen (31) auf mindestens zwei nebeneinanderliegenden scheibenförmigen Stützrollen (17, 18) abgelegt und mit den Flanschen (28) an senkrecht zu der Auflagefläche (23) der scheibenförmigen Stützrollen (17, 18) entlang der Längsförderrichtung (16) fest angeordneten Anlageelementen (24) angelegt werden.

2. Verfahren nach Anspruch 1,
dadurch gekennzeichnet,
daß die scheibenförmigen Stützrollen (17,18) in Längsförderrichtung (16) der Profile (19) hintereinander an jeweils einer von zwei nebeneinanderliegenden und senkrecht zur Längsförderrichtung (16) verstellbaren Rollenleisten (11,12) angeordnet sind.

3. Verfahren nach einem der Ansprüche 1 oder 2,
dadurch gekennzeichnet,
daß die Stützrollen (17,18) der Rollenleisten (11,12) in Längsförderrichtung (16) versetzt zueinander angeordnet sind.

4. Verfahren nach einem der Ansprüche 1 bis 3,
dadurch gekennzeichnet,
daß die Profile (19) mit einer großen Stützweite (23) auf den scheibenförmigen Stützrollen (17,18) abgelegt werden und der die Stützweite (23) bestimmende Abstand (a) zwischen den Außenflächen (21,22) der scheibenförmigen Stützrollen (17,18) von einer Steuerung (13) durch eine Verminderung des abgespeicherten Betrages der Profilhöhe (h) des Profiles (19) um die jeweiligen Flansch- bzw. Wulstbreiten (s) und der Radien (r) eingestellt wird.

5. Verfahren nach Anspruch 4,
dadurch gekennzeichnet,
daß der Abstand (a) zwischen den Außenflächen (21,22) der scheibenförmigen Stützrollen (17,18) von der Steuerung (13) um einen von der Profilhöhe (h) abhängigen Betrag (k) vermindert wird.

6. Vorrichtung zur Durchführung des Verfahrens nach einem der Ansprüche 1 bis 5,
gekennzeichnet durch
zwei Rollenleisten (11,12) mit drehbar gelagerten scheibenförmigen Stützrollen (17,18) und zwei Antrieben zum Verschieben der Rollenleisten (11,12) senkrecht zur Längsförderrichtung (16).

## Claims

1. Method for supporting bar-shaped workpieces which are placed on disc-shaped support rollers of a longitudinal conveyor, characterised in that the workpieces, constructed as U-shaped, I-shaped, L-shaped, T-shaped or beaded profiles (19), are placed with their web surfaces (31) on at least two adjacent disc-shaped support rollers (17, 18) and are placed with the flanges (28) against contact elements (24) arranged fixedly perpendicular to the resting surface (23) of the disc-shaped support rollers (17, 18) along the longitudinal conveying direction (16).

2. Method according to Claim 1, characterised in that the disc-shaped support rollers (17, 18) are arranged successively in the longitudinal conveying direction (16) of the profiles (19) in each case on one of two adjacent roller strips (11, 12), which are adjustable perpendicular to the longitudinal conveying direction (16).

3. Method according to one of Claims 1 or 2, characterised in that the support rollers (17, 18) of the roller strips (11, 12) are arranged offset in relation to one another in the longitudinal conveying direction (16).

4. Method according to one of Claims 1 to 3, characterised in that the profiles (19) are placed on the disc-shaped support rollers (17, 18) with a large support width (23) and the distance (a) determining the support width (23), between the outer surfaces (21, 22) of the disc-shaped support rollers (17, 18) is set by a control (13) by reducing the stored amount of the profile height (h) of the profile (19) by the respective flange or bead width(s) and the radii (r).

5. Method according to Claim 4, characterised in that the distance (a) between the outer surfaces (21, 22) of the disc-shaped support rollers (17, 18) is reduced by the control (13) by an amount (k) which depends on the profile height (h).

6. Device for carrying out the method according to one of Claims 1 to 5, characterised by two roller strips (11, 12) having rotatably mounted disc-shaped support rollers (17, 18) and two drives for displacing the roller strips (11, 12) perpendicular to the longitudinal conveying direction (16).

## Revendications

1. Procédé pour soutenir des pièces d'oeuvre en forme de barreaux, qui sont disposées sur des galets d'appui en forme de rondelles, d'un transporteur longitudinal, procédé caractérisé en ce que les pièces d'oeuvre réalisées sous la forme de profilés en U, en I, en L, en T ou bien les profilés à boudins (19) sont déposées par leurs surfaces d'âme (31) sur au moins deux galets de soutien en forme de disques (17, 18) placés l'un à côté de l'autre, et sont appliquées par leurs semelles (28) contre des éléments d'appui (24) disposés à poste fixe le long de la direction de transport longitudinal (16) perpendiculairement à la surface d'appui (23) des galets de soutien en forme de disques (17, 18).

2. Procédé selon la revendication 1, caractérisé en ce que les galets de soutien en forme de disques (17, 18) sont disposés dans la direction de transport longitudinal (16) des profilés (19) les uns derrière les autres sur respectivement une des deux lignes de galets (11, 12) placées l'une à côté de l'autre et susceptibles d'être déplacées perpendiculairement à la direction de transport longitudinal (16).

3. Procédé selon une des revendications 1 ou 2, caractérisé en ce que les galets d'appui (17, 18) des lignes de galets (11, 12) sont décalés les uns par rapport aux autres dans la direction de transport longitudinal (16).

4. Procédé selon une des revendications 1 à 3, caractérisé en ce que les profilés (19) sont déposés sur les galets de soutien en forme de disques (17, 18) avec une grande largeur d'appui (23), et que la distance (a) entre les surfaces externes (21, 22) des galets de soutien en forme de disques (17, 18) qui détermine cette largeur d'appui (23), est réglée par une commande (13) en réduisant la valeur mémorisée de la hauteur (h) du profilé (19) de l'épaisseur respective de la semelle ou du boudin (s) et du rayon (r).

5. Procédé selon la revendication 4, caractérisé en ce que la distance (a) entre les surfaces externes (21, 22) des galets de soutien en forme de disques (17, 18) est diminuée par la commande (13) d'une valeur (k) dépendant de la hauteur (h) du profilé.

6. Dispositif pour la mise en oeuvre du procédé selon une des revendications 1 à 5, caractérisé en ce qu'il comporte deux lignes de galets (11, 12) avec des galets de soutien en forme de disques (17, 18) montés de façon à pouvoir tourner et deux entraînements pour déplacer les lignes de galets (11, 12) perpendiculairement à la direction de transport longitudinal (16).

FIG. 1

EP 0 321 685 B1

# FIG. 2

# FIG. 3

FIG.3a

FIG.3b

FIG.3c

FIG.3d